# EUROPEAN PATENT APPLICATION

(11) **EP 4 782 416 A1**
(43) Date of publication of application: **29.07.2026**
(21) Application number: 25153269.3
(22) Date of filing: 22.01.2025
(51) Int. Cl.: C04B 28/06, C04B 28/14, C04B 111/00, C04B 24/26, C04B 40/06

(54) **FORMULATION COMPRISING BELITE-YE'ELIMITE-FERRITE (BYF) CLINKER**

(71) Applicant: Henkel AG & Co. KGaA, 40589 Düsseldorf (DE)
(72) Inventor: Kupinski, Marcin, 25-558 Kielce (PL); Auer, Stephan, 58730 Fröndenberg (DE); Lipnicka, Malgorzata Katarzyna, 26-220 Staporków (PL); Maier, Wolfgang, 40721 Hilden (DE); Kotwica, Lukasz, 31-419 Kraków (PL)

(57) **Abstract**

The present disclosure is directed to a particulate formulation comprising a) belite-ye'elimite-ferrite clinker, b) calcium sulfate, c) at least one water-dispersible powdered polymer (PF) and d) substantially inert filler, a coating composition and method of forming a coated substrate or a composite structure.

## Description

### FIELD OF THE INVENTION

The present disclosure is directed to a particulate formulation comprising a Belite-Ye'elimite-Ferrite (BYF) clinker. More particularly, the present disclosure is directed to a particulate formulation comprising a Belite-Ye'elimite-Ferrite (BYF) clinker, a water-dispersible polymer and a substantially inert filler, which formulation may be combined with water to form a cementitious mortar composition.

### BACKGROUND TO THE INVENTION

Cement is the largest manufactured product on Earth by mass and the second most used substance in the world after water. Combined with water and mineral aggregates, it forms cement-based materials which constitute a substantial proportion of the built environment. There exists a significant growth in cement demand worldwide and particularly so in the developing world. However, concomitant with this growth in demand is an increase in proportion of total anthropogenic CO₂ emissions which may be attributed to cement production.

The traditional form of cement - ordinary Portland cement (OPC) containing at least 90 wt.% Portland cement clinker - is made from abundant raw materials cheaply available almost everywhere: the production process requires grinding and calcining of a mixture of clay and limestone. The resulting intermediate material, or clinker, is ground to a fine powder with from 3 to 5 wt.% of gypsum added to form said OPC.

The production of OPC generates at least 842kg CO₂ per metric ton of clinker. Fossil fuel combustion is responsible for less than 40 wt.% of total CO₂ emissions, while limestone (CaCOs or CaO.CO₂) decomposition during calcination is responsible for more than 60 wt.% thereof. The CO₂ emissions from cement manufacture can thus be contrasted with emissions produced simply by burning fossil fuels for energy production: seeking to reduce CO₂ emissions by increasing energy efficiency can only impact the minority source of CO₂ emissions in the cement production process.

To impact the majority source, the amount of limestone subjected to calcination in the production of cement and cementitious materials must also be minimized. Broadly, three main strategies have been recognized to this end: i) increasing efficiency in the use of Portland cement clinker in cementitious material through, for instance, reduced industrial wastage, appropriate selection of material grades and optimizing the mix and particle packing properties of cementitious materials; ii) increasing the use of low-COz supplementary cementitious materials (SCM), such as granulated blast furnace slag (GBFS) and fly ash (FA) as partial replacements for Portland cement clinker; and, iii) developing alternatives to said Portland cement clinker.

Belitic clinkers containing ye'elimite (*anhydrous calcium sulfo aluminate,* CSA) have been identified as promising lower-carbon alternatives to Portland clinkers. These alternative clinkers can be made in conventional Portland cement plants, requiring only changes in the proportions of the main raw materials, specifically a reduction in limestone and an increase in aluminium sources. Problematically, aluminium sources - such as bauxite and other high-alumina minerals - can be expensive as there are competitive industrial uses for these sources and variance in their availability. On account of this, certain authors have focused on developing cementitious materials containing Belite-Ye'elimite-Ferrite (BYF) in which the ye'elimite content is below 35%, belite is the major component and the level of ferrite (C₄AF) is also significant.

CN 109824329 A (Tangshan Polar Bear Building Material Co. Ltd.) describes a self-compacting leveling concrete characterized by comprising: from 250 to 510 kg/m³ of hard high belite sulphoaluminate cement; from 687 to 1070 kg/m³ of fine aggregate; from 815 to 1042 kg/m³ of coarse aggregate; from 120 to 182 kg/m³ of water; and, from 0.8 to 9.2 kg/m³ water reducing agent.

CN 115594480 A (Sika Tech. AG) discloses a grout composition comprising, based on the dry composition gross weight: A) 12-50 wt.% of calcium sulfoaluminate cement; B) 3.5-33 wt.% of high belite calcium sulfoaluminate cement; C) 1.3-10 wt.% of calcium sulfate; D) 0-2 wt.% of alkaline earth metal oxides or hydroxides; wherein the total amount of the three components A) to C) is from 42 to 54.5 wt.% based on the total weight of the dry composition. In an embodiment, the high belite calcium sulfoaluminate cement comprises clinker comprising: 37-47 wt.% belite; 20-35 wt.% calcium sulfoaluminate; 3-9 wt.% ferrite; and, 0.5-4.6 wt.% CaO, each relative to the total dry weight of the clinker.

FR2941450A1 (Lafarge SA) discloses a composition having utility as a cement which comprises, based on the total weight of the composition: from 1 to 99% of a Portland clinker or Portland cement; and, from 99 to 1% of a Belite-Calcium-Sulphoaluminous-Ferrite clinker (BCSAF). The clinker comprises, based on the total mass of BCSAF clinker: from 5 to 30 wt.%, of a calcium aluminoferrite phase having the general formula C₂A_{X}F(_{1-X}), wherein x is from 0.2 to 0.8; from 10 to 35%, of a calcium sulfoaluminate phase (*ye'elimite,* (C₄A₃$); from 40 to 75% of belite (C₂S); and, from 0.01 to 10% of one or more minor phases selected from calcium sulphates, alkali sulphates, perovskite, gehlenite, free lime and periclase, and/or a vitreous phase, wherein the total of the percentages of these phases is greater than or equal to 97%. The clinker further contains one or more secondary elements chosen from sulfur, magnesium, sodium, potassium, boron, phosphorus, zinc, manganese, titanium, fluorine, chlorine.

US2012145045A1 (Walenta et al.) discloses a composition comprising, based on the total mass of the composition: from 0.01 to 3 wt.% of polycarboxylic acid or salts thereof, said polycarboxylic acid comprising 2 to 4 carboxyl groups per molecule; and, from 97 to 99.99% of a Belite-Calcium-Sulphoaluminate-Ferrite clinker (BCSAF clinker). The clinker comprises, based on the total mass of BCSAF clinker: from 5 to 30 wt.%, of a calcium aluminoferrite phase having the general formula C₂A_{X}F(_{1-X}), wherein x is from 0.2 to 0.8; from 10 to 35%, of a calcium sulfoaluminate phase (*ye'elimite,* (C₄A₃$); from 40 to 75% of belite (C₂S); and, from 0.01 to 10% of one or more minor phases selected from calcium sulphates, alkali sulphates, perovskite, gehlenite, free lime and periclase, and/or a vitreous phase, wherein the total of the percentages of these phases is greater than or equal to 97%.

It is noted that BYF cements offer high early strength, low shrinkage and fast drying. Strength development of BYF can be moderated through variations in the belite to ye'elimite ratio in the clinker and the level of sulfate addition. Furthermore, whilst BYF cements do exhibit very rapid hydration, this may be facilely controlled by a retarder - such as boric acid - in order to achieve a sufficient open time. Despite these advantages, the commercial uptake of BYF cements has been muted.

It is recognized that, in recent years, the performance requirements for cementitious materials has become increasingly demarcated by the criteria of *inter alia* open time, initial tensile strength, tensile strength under ageing and tensile strength under free-thaw cycles, which criteria enable materials to be differentiated into categories in a simple manner. For instance, European Standard EN12004:2-2017 applies such criteria to differentiate cementitious mortars (Class C) into those having normal setting requirements (Class C1) and those with more stringent requirements or further characteristics, such as Class C2 improved adhesives. It is the present inventors' position that cements based on BYF which are known in the art have demonstrated insufficient resistance to freeze-thaw cycles for certain applications.

### STATEMENT OF THE INVENTION

In accordance with a first aspect of the present disclosure there is provided a particulate formulation comprising:
a) belite-ye'elimite-ferrite clinker;
b) calcium sulfate;
c) at least one water-dispersible powdered polymer (P^{F}); and,
d) substantially inert filler.

An exemplary particulate formulation comprises, based on the total weight of the particulate formulation:
from 20 to 90 wt.%, preferably from 20 to 60 wt.% and more preferably from 30 to 60 wt.% of a) said belite-ye'elimite-ferrite clinker;
from 0 to 10 wt.%, preferably 0.5 to 10 wt.%, more preferably 2 to 6 wt.% of b) said calcium sulfate;
from 0.5 to 20 wt.%, preferably from 0.5 to 15 wt.% and more preferably from 1 to 10 wt.% of c) said at least one water-dispersible powdered polymer (P^{F}); and,
from 30 to 75 wt.%, preferably from 40 to 70 wt.% and more preferably from 50 to 60 wt.% of d) said substantially inert filler.

The particulate formulation should preferably be exemplified by a moisture content, as determined by thermogravimetry, of less than 5 wt.%, for example less than 2 wt.%, less than 1 wt.% or even less than 0.5 wt.%, based on the total weight of the particulate formulation.

Independently of, or additional to the above characterizations, the particulate formulation may be characterized in that the belite-ye'elimite-ferrite clinker has a Blaine Specific Surface Area of from 3000 to 10000 cm²/g, as determined in accordance with European Standard EN 196-6 (2019).

In important embodiments of the particulate formulation, the belite-ye'elimite-ferrite clinker comprises, based on the weight of the belite-ye'elimite-ferrite clinker: from 5 to 30 wt.% of i) a calcium aluminoferrite phase having the general formula 2CaO·x Al₂O₃·(1-x) Fe₂O₃, wherein x is from 0.2 to 0.8; from 10 to 35 wt.% of ii) a calcium sulfoaluminate phase having the general formula (4CaO·3Al₂O₃·SO₃); from 40 to 75 wt.% of iii) a belite phase having the general formula 2CaO· SiO₂; and, from 0.01 to 10 wt.% of iv) at least one more phase selected from calcium sulphates, alkali sulphates, perovskite, gehlenite, free lime, periclase a vitreous phase and combinations thereof, wherein the total of the percentage by weight of phases (i)-iv)) is at least 97 wt.%.

In part c) of the particulate formulation, it is preferred that the or each water-dispersible powdered polymer (P^{F}) is a water-insoluble, film-forming powdered polymer. Independently of, or additional to this statement of preference, the or each water-dispersible powdered polymer (P^{F}) of the formulation should preferably have a calculated glass transition temperature (T_{g}) of from -60°C to 80°C, preferably from -20°C to 50°C and more preferably from -10°C to 30°C.

In an embodiment, the particulate formulation further comprises: a colloidal stabilizer in an amount up to 35 wt.%, based on the weight of c) said at least one water-dispersible powdered polymer (P^{F}); and / or, an anti-blocking agent in an amount up to 35 wt.%, based on the weight of b) said at least one water-dispersible powdered polymer (P^{F}).

The substantially inert filler d) of the formulation should desirably have a particle size of from 30 mesh to 1000 mesh, such as from 30 mesh to 500 mesh or from 100 mesh to 500 mesh, as determined in accordance with ISO 3310-1:2016 *Test sieves* - *Technical requirements and testing* - *Part 1: Test sieves of metal wire cloth.* Independently of, of additional to this particle size recital, the substantially inert filler should preferably have a BET surface area of from 1 to 30 m²/g.

In accordance with a second aspect of the present disclosure there is provided a composition comprising: water; a) belite-ye'elimite-ferrite clinker; b) calcium sulfate, c) at least one water-dispersible polymer (P^{F}); and, d) substantially inert filler, wherein said composition is characterized by water to cement factor of from 0.3 to 1.5, preferably from 0.4 to 0.8 and preferably said composition is further characterized by a water factor of from 0.10 to 0.6, preferably from 0.20 to 0.40.

In an important embodiment, there is provided a two-component (2K) mortar composition comprising:
a first component comprising the particulate formulation as defined hereinabove and in the appended claims; and,
a second component comprising water,
wherein said composition is characterized by cement to water to cement factor of from 0.3 to 1.5, preferably from 0.4 to 0.8 and preferably said composition is further characterized by a water factor of from 0.10 to 0.6, preferably from 0.20 to 0.40.

The present disclosure further provides a method of forming a coated substrate, said method comprising:
si) providing a composition as defined herein above and in the appended claims;
sii) providing a substrate comprising a first substrate surface;
siii) applying said composition to said first substrate surface; and,
siv) allowing said applied composition to harden.

In a further aspect, the present disclosure provides a method of forming a composite structure, said method comprising:
ci) providing a composition as defined herein above and in the appended claims:
cii) providing a first substrate comprising a first substrate surface;
ciii) applying said composition to said first substrate surface;
civ) providing a second substrate comprising a second substrate surface;
cv) disposing said second substrate onto the applied composition such that said composition is interposed between said second substrate surface and said first substrate surface; and,
cvi) allowing said applied composition to harden.

Typically, in step siii) or step ciii) of the described methods, said composition is applied to a total wet film thickness of from 5 to 200 mm, preferably 10 to 100 mm. It is also typical that, in step siv) or step cvi) of the described methods, said applied composition is permitted to harden at a temperature of from 5°C to 70°C, preferably from 10°C to 40°C and in particular from 15°C to 30°C.

The applied compositions of the coated structure and the composite structure demonstrate - after hardening - efficacious properties including flexural and compressive strength under heat-ageing and freeze-thaw cycling. The applied, hardened compositions are considered to have advantageous resistance to thermal shocks.

Where the aspects of the disclosure are described herein as having certain embodiments, any one or more of those embodiments can, unless otherwise stated, be implemented in or combined with any one of the further embodiments, even if that combination is not explicitly described. Expressed differently, the described embodiments are not mutually exclusive unless stated as being such, and permutations thereof remain within the scope of this disclosure.

### DETAILED DESCRIPTION

### DEFINITIONS

As used herein, the singular forms "*a*", "*an*" and "*the*" include plural referents unless the context clearly dictates otherwise.

The terms *"comprising", "comprises"* and *"comprised of'* as used herein are synonymous with *"including", "includes", "containing"* or *"contains",* and are inclusive or open-ended and do not exclude additional, non-recited members, elements or method steps.

As used herein, the term "*consisting of*" excludes any element, ingredient, member or method step not specified. For completeness, the term *"comprising"* encompasses "*consisting of*".

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being "*from 0 to x*" specifically includes 0 wt.%: the ingredient defined by said range may be absent from the composition or may be present in the composition in an amount up to x wt.%.

The words "*preferred*", "*preferably*", *"desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word *"may"* is used in a permissive sense - that is meaning to have the potential to - rather than in the mandatory sense.

As used herein, room temperature is 23°C plus or minus 2°C. As used herein, *"ambient conditions"* means the temperature and pressure of the surroundings in which the composition is located or in which a layer or the substrate of said layer is located.

"*Two-component (2K) compositions"* in the context of the present invention are understood to be compositions in which a first component (1) and a second component (2) must be stored separately because of their (high) reactivity. The two components are mixed either before or during application and then react, typically without additional activation. Higher temperatures may be applied in order to accelerate the reaction between mixed components.

The term *"anhydrous"* is intended to mean herein that the applicable composition, component or part comprises less than 0.25 wt.% of water, based on the weight of the composition, component or part. The term *"essentially free of*" should be interpreted analogously as meaning the relevant composition, component or part comprises less than 0.25 wt.% of the stated element.

As used herein, the term *"water"* is intended to encompass tap water, spring water, purified water, de-ionized water, de-mineralized and distilled water. Water is included in the compositions of the present invention in its liquid form. The presence of solid water particles - ice - is not desirable as solid water cannot be mobilized for the formation of the hydrates required for the development of strength in cured composition.

The aforementioned composition may be defined herein by *"wt. % based on the total weight of non-volatile constituents in the composition".* For completeness, a volatile constituent is a constituent which has an initial boiling point of less than or equal to 250°C as measured at a standard atmospheric pressure of 101.3 kPa. A non-volatile constituent is therefore a constituent which has an initial boiling point of more than 250°C as measured at a standard atmospheric pressure of 101.3 kPa.

The expression *"substantially inert*" in relation to the filler means that the filler possesses substantially no pozzolanic activity. The expression is intended to encompass fillers which are chemically inactive and have no ability to react.

By *"refractory material*" to which the composition of the present disclosure may be applied is meant a material having a melting point above 1500°C. This definition encompasses: refractory materials which are elements, such as graphite, boron, silicon, titanium, hafnium, zirconium, molybdenum, niobium, tantalum and tungsten; and, refractory materials which are compounds, said compounds typically being silicides, oxides, borides or carbides. Examples of refractory compounds include: aluminum oxide; aluminium nitride; silicon oxide; magnesium oxide; calcium oxide; zirconium oxide; chromium oxide; silicon carbide; silicon nitride; boron carbide; and, boron nitride. The term *"refractory material*" is further intended to encompass both monolithic materials and shaped materials. And there is no particular intention to limit the shape of such refractory materials: illustrative shapes include ceramic fibers, blocks, bricks, wedges, tiles and plates but more complex geometries are equally envisaged.

As used herein, the term *"metallic material*" means a pure metal, a metal alloy or a metal composite. As exemplary metals and metallic alloys to which the compositions of the present disclosure may be applied, mention may be made of: aluminum; aluminum alloys; bronze; beryllium; beryllium alloys; chromium; chromium alloys; cobalt; cobalt alloys; copper; copper alloys; gold; iron; iron alloys; steels; magnesium; magnesium alloys; nickel; nickel alloys; lead; lead alloys; tin; tin alloys, such as tin-bismuth and tin-lead; zinc; zinc alloys; and, superalloys, such as International Nickel 100 (IN-100) or International Nickel 718 (IN-718). Representative steels include: crucible steel; carbon steel; spring steel; alloy steel; maraging steel; and, stainless steel, inclusive of austenitc stainless steel, ferritic stainless steel, duplex stainless steel, and Martensitic stainless steel. And again there is no particular intention to limit the shape of such metallic materials: the complex geometries of pipes, elbows, hoppers, bins, chutes, furnaces and the like found in industrial installations are certainly envisaged.

As used herein, *"concrete"* means any type of building material containing aggregates such as stone, gravel, brushed rock or sand which are embedded in a matrix - cement or binder - that fills the space between the aggregate particles and binds them together. Exemplary matrices include Portland Cement, mineral mortar, asphalt and polymer resins. The *"concrete"* may further include organic or silica-based fibers or metallic wires, cables or rods as reinforcing materials.

For completeness, the term *"water factor"* is used herein to denote the weight of water used in a composition divided by the total weight of used non-volatile components (w/w) and the term *"water to cement factor"* is used herein to denote the weight of water used in a composition divided by the total weight of used cement (w/w).

As used herein, the term *"monomer"* refers to a substance that can undergo a polymerization reaction to contribute constitutional units to the chemical structure of a polymer. The generic term *"polymer"* encompasses homopolymers obtained from only one type of monomer and copolymers obtained from at least two types of monomer. As regards said copolymers, the term encompasses copolymers possessing block, graft, sequential or gradient compositions.

The term *"latex polymer",* as used herein, refers to a polymer which forms a dispersion or emulsion of polymer particles in the presence of water and one or more secondary dispersing or emulsifying agents, the presence of which is required to form the dispersion or emulsion. The secondary dispersing or emulsifying agent is typically separate from the polymer after polymer formation but it is not precluded that a reactive dispersing or emulsifying agent may become part of the polymer particles as they are formed.

As used herein, *"curing"* refers to the reactions through which a given composition hardens from a fluid mixture into a solid. Broadly, curing may be performed herein by exposure to ambient conditions or by deliberate exposure to heat or radiation.

Unless otherwise stated, the term "*particle size"* refers to the largest axis of the particle. In the case of a generally spherical particle, the largest axis is the diameter.

The term *"mean volume particle size" (Dᵥ50)*, as used herein, refers to a particle size corresponding to 50% of the volume of the sampled particles being greater than and 50% of the volume of the sampled particles being smaller than the recited Dᵥ50 value. Similarly, if used, the term "*Dᵥ90*" refers to a particle size corresponding to 90% of the volume of the sampled particles being smaller than and 10% of the volume of the sampled particles being greater than the recited Dᵥ90 value. The determination of particle size by *inter alia* laser diffraction may be performed using a particle size analyzer to obtain the particle size distribution (Dₓ).

Viscosities of the compositions described herein are, unless otherwise stipulated, measured using the Brookfield Viscometer at standard conditions of 20°C and 50% Relative Humidity (RH). The method of calibration, the spindle type and rotation speed of the Brookfield Viscometer are chosen according to the instructions of the manufacturer as appropriate for the composition to be measured.

### PARTICULATE FORMULATION

As described above, the particulate formulation of the present disclosure comprises: a) belite-ye'elimite-ferrite clinker; b) calcium sulfate; c) at least one water-dispersible powdered polymer (P^{F}); and, d) substantially inert filler.

In the presence of moisture, the formulation will harden due to the reaction of the clinker therewith. As such, for the particulate formulation to be storage stable, it should desirably be in a dry or substantially dry form. More particularly, the particulate formulation should preferably be characterized by a moisture content, as determined by thermogravimetry, of less than 5 wt.%, based on the weight of the particulate formulation. In exemplary embodiments, the particulate formulation may have a moisture content of less than 2 wt.%, less than 1 wt.% or even less than 0.5 wt.% based on the weight of the particulate formulation.

### a) Belite-Ye'elimite-Ferrite Clinker

The particulate formulation of the present disclosure comprises a belite-ye'elimite-ferrite clinker. It is preferred that the formulation comprises, based on the weight of the particulate formulation, from 20 to 90 wt.%, for example from 20 to 60 wt.% or from 30 to 60 wt.% of said belite-ye'elimite-ferrite clinker.

The belite-ye'elimite-ferrite clinker may be exemplified by a Blaine Specific Surface Area of from 3000 to 10000 cm²/g, as determined in accordance with European Standard EN 196-6 (2019). The clinker may preferably have a Blaine Specific Surface Area of from 3000 to 9000 cm²/g or from 4000 to 8000 cm²/g.

Independently or, of additional to the surface area characterization above, the belite-ye'elimite-ferrite clinker may be exemplified by comprising, based on the weight of the belite-ye'elimite-ferrite clinker: from 5 to 30 wt.% of i) a calcium aluminoferrite phase having the general formula 2CaO·x Al₂O₃·(1-x) Fe₂O₃, wherein x is from 0.2 to 0.8; from 10 to 35 wt.% of ii) a calcium sulfoaluminate phase having the general formula (4CaO·3Al₂O₃·SO₃); from 40 to 75 wt.% of iii) a belite phase having the general formula 2CaO· SiO₂; and, from 0.01 to 10 wt.% of iv) at least one more phase selected from calcium sulphates, alkali sulphates, perovskite, gehlenite, free lime, periclase a vitreous phase and combinations thereof, wherein the total of the percentage by weight of phases (i)-iv)) is at least 97 wt.%.

More particularly, the belite-ye'elimite-ferrite clinker may be exemplified by comprising, based on the weight of the belite-ye'elimite-ferrite clinker: from 10 to 30 wt.% of i) a calcium aluminoferrite phase having the general formula 2CaO·x Al₂O₃·(1-x) Fe₂O₃, wherein x is from 0.3 to 0.7; from 15 to 30 wt.% of ii) a calcium sulfoaluminate phase having the general formula (4CaO·3Al₂O₃·SO₃); from 45 to 70 wt.% of a belite phase having the general formula 2CaO· SiO₂; and, from 0.01 to 5 wt.% of iv) at least one more phase selected from calcium sulphates, alkali sulphates, perovskite, gehlenite, free lime, periclase a vitreous phase and combinations thereof, wherein the total of the percentage by weight of these phases (i)-iv)) is at least 98 wt.%.

Where applicable, the clinker may comprise - in addition to said phases i) to iv) - one or more secondary elements chosen from sulfur, magnesium, sodium, potassium, boron, phosphorus, zinc, manganese, titanium, fluorine, chlorine and mixtures thereof.

The above-described clinker may be obtained as a commercial product of which a non-limiting example is Ternocem, available from Heidelberg Materials. Alternatively, the above-described clinker may be obtained from a raw meal comprising at least one material which is able, by clinkerization, to provide the disclosed phases in the requisite proportions. Exemplary materials, which may be present in the raw meal either alone or in combination include: phosphate limestone; magnesium limestone; clays; fly ash; hearth ash; fluidised bed ash; laterite; bauxite; red mud; slag; clinker; gypsum; desulphogypsum; phosphogypsum; desulphurisation mud; and, industrial slag.

In the clinkerization process, the raw meal is subject to calcination at a temperature of from 1000 to 1400°C, for example from 1000 to 1350°C in an oxidizing atmosphere that prevents the reduction of sulfur species to sulfur dioxide. The total duration of the calcination will typically be from 20 to 240 minutes.

The calcination may, in certain embodiments, be conducted in a staged manner exemplified by different temperature stages which serve to form and stabilize particular mineral phases of the clinker. For instance, but without intention to limit the present disclosure, the calcination may be conducted in the following staged manner: a first stage in which the raw meal is heated over a duration T' from an initial temperature up to a temperature of from 1000 to 1250°C to form a first stage product; a second stage in which the first stage product is held at a temperature of from 1000 to 1250°C for a duration T² to form a second stage product; a third stage in which the second stage product is heated to a temperature of from 1250 to 1300°C and held at that temperature for a duration T³ to form a third stage product; a fourth stage in which the third stage product is cooled to a temperature of from 1000 to 1250°C and maintained at that temperature for a duration T⁴ to form a fourth stage product; and, a fifth cooling stage wherein the fourth stage product is cooled to a final temperature over a duration T⁵ to provide the clinker. In this exemplary staged calcination, the higher temperature third stage may serve to form and stabilize in the product thereof the calcium sulfoaluminate phase having the general formula (4CaO·3Al₂O₃·SO₃).

In the course of calcination, whether performed in the staged manner or otherwise, the formation of mineral phases may be monitored by *inter alia* scanning electron microscopy (SEM) or X-ray diffraction. Suitable durations (T¹-T⁵) may be determined by sampling and monitoring of the meal during the exemplary staged calcination.

Subsequent to calcination, the formed belite-ye'elimite-ferrite may subjected to at least one of grinding or classification to obtain a clinker having the desired particle size characteristics such as, but not limited to, the Blaine Specific Surface Area described above.

Grinding and classification may each be performed in or more stages. Exemplary means of grinding, which may be used alone or in combination include: pin grinders; cutting grinders; impact grinders; hammer mills; ball mills; disc mills; edge mills; Wiley mills; grist mills; and, air jet grinders. Classification is typically performed pneumatically, wherein the material is suspended in a moving gas - conventionally air - to obtain fractions distinguished by effective particle size. Exemplary pneumatic classifiers, which may be used alone or in combination include: static classifiers having horizontal or vertical gas currents; and, centrifugal classifiers, such as cyclones and dynamic separators.

### b) Calcium sulfate

The formulation also comprises calcium sulfate, which can be incorporated as anhydrite, hemihydrate, or dihydrate, preferably CaSO₄ anhydite. Alongside the clinker phase, the CaSO₄ is added in addition any may form together with the belite-ye'elimite-ferrite clinker a belite-ye'elimite-ferrite cement, like in the Ternocem cement, available from Heidelberg Materials. The calcium sulfate can be optionally added in amounts ranging from 0 to 15 wt.%, preferably 0.5 to 10 wt.%, more preferably 2 to 6 wt.%. The calcium sulfate together with the belite-ye'elimite-ferrite clinker can make up for the cement part of the formulation.

### c) Water Dispersible Polymer

The formulation comprises from 0.5 to 20 wt.%, based on the weight of the particulate formulation, of a water dispersible powdered polymer (P^{F}). In important embodiments, the dry mix formulation comprises from 0.5 to 15 wt.% or from 1 to 10 wt.%, based on the weight of the particulate formulation, of said water dispersible powdered polymer (P^{F}).

There is no particular intention to limit the polymer (P^{F}) which may be employed in the present disclosure. It is desirable, however, for said water-dispersible powdered polymer (P^{F}) to be film-forming and a preference may be acknowledged for water-insoluble, film-forming polymers. Independently, it is preferred that the polymer (P^{F}) has a calculated glass transition temperature (T_{g}) of from -60°C to 80°C, preferably from -20°C to 50°C and more preferably from -10°C to 30°C. The proportions by weight of the residues of (co-)monomers in the polymer (P^{F}) may be chosen to obtain the desired glass transition temperature.

Exemplary film forming polymers (P^{F}) include: polyolefins; polyurethanes; vinyl chloride-ethylene copolymers; styrene-1,3-butadiene copolymers; copolymers of styrene and least one (meth)acrylic acid ester; vinyl acetate homopolymers; copolymers of vinyl acetate and ethylene; copolymers of vinyl acetate, ethylene and styrene; copolymers of vinyl acetate, ethylene and vinyl chloride; copolymers of vinyl acetate, at least one (meth)acrylic acid ester and at least one further vinyl ester; copolymers of vinyl acetate, ethylene and at least one (meth)acrylic acid ester; and, copolymers of vinyl acetate, ethylene and at least one further vinyl ester.

Such further vinyl ester co-monomers include vinyl propionate, vinyl butyrate, vinyl caprolate, vinyl valerate, vinyl hexanoate, vinyl decanoate, vinyl laurate, vinyl pivalate, vinyl benzoate, vinyl cinnamate and monomers of the VEOVA^{™} series available from Shell Chemical Company.

Suitable (meth)acrylic acid esters, of which the residues are included in the above described copolymers, are those represented by Formula I:

H₂C=CGCO₂R^{a} (I)

wherein:
G is hydrogen, halogen or methyl; and,
R^{a} is: C₁-C₃₀ alkyl; C₁-C₁₈ hydroxyalkyl; C₂-C₃₀ heteroalkyl; C₃-C₃₀ cycloalkyl; C₂-C₈ heterocycloalkyl; C₂-C₂₀ alkenyl; C₂-C₁₂ alkynyl; C₆-C₁₈ aryl; C₁-C₉ heteroaryl; C₇-C₁₈ alkaryl; or, C₇-C₁₈ aralkyl.

It is preferred in monomers of Formula I that R^{a} is: C₁-C₁₈ alkyl; C₁-C₁₂ hydroxyalkyl; C₂-C₁₈ heteroalkyl, C₃-C₁₈ cycloalkyl; C₂-C₈ heterocycloalkyl; C₂-C₈ alkenyl; C₂-C₈ alkynyl; C₆-C₁₈ aryl; C₁-C₉ heteroaryl; C₇-C₁₈ alkaryl; or, C₇-C₁₈ aralkyl. It is particularly preferred in monomers of Formula I that R^{a} is: C₁-C₁₂ alkyl; C₁-C₆ hydroxyalkyl; C₃-C₁₂ cycloalkyl; or, C₆-C₁₈ aryl.

Examples of (meth)acrylate monomers in accordance with Formula (I) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclopropyl (meth)acrylate; cyclobutyl (meth)acrylate; cyclopentyl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth)acrylate; trifluoroethyl (meth)acrylate; perfluorooctyl (meth)acrylate; benzyl (meth)acrylate; phenoxyethyl (meth)acrylate; phenoxydiethylene glycol (meth)acrylate; phenoxypropyl (meth)acrylate; and, phenoxydipropylene glycol (meth)acrylate.

In an interesting embodiment, said at least one polymer (P^{F}) comprises a copolymer which is the reaction product of: at least one vinyl aromatic monomer; at least one (meth)acrylic acid ester; and, at least one ethylenically unsaturated acid functional monomer. In an alternative embodiment, said at least one polymer (P^{F}) comprises a copolymer which is the reaction product of: at least one vinyl aromatic monomer; at least one 1,3-diene monomer; and, at least one ethylenically unsaturated acid functional monomer. Conventionally said at least one ethylenically unsaturated acid functional monomer should account for from 1 to 15 wt.%, for instance from 1 to 10 wt.% or from 1 to 5 wt.% of the total weight of monomer residues in said copolymers.

As regards these embodiments, suitable (meth)acrylic acid ester monomers include those described above. In addition, suitable 1,3-dienes include 1,3-butadiene and isoprene: a preference for 1,3-butadiene may be noted. Still further, suitable vinyl aromatic monomers include, in particular, those represented by Formula (VA): 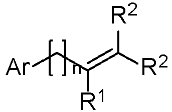 wherein:
R¹ is H or C₁-C₄ alkyl;
each R² is independently hydrogen or C₁-C₄ alkyl;
Ar is unsubstituted phenyl or phenyl substituted with from 1 to 5 substituents, wherein each substituent is independently halogen or C₁-C₄ alkyl; and,
n is an integer from 0 to 4.

In preferred monomers in accordance with Formula VA: R¹ is H or methyl; each R² is independently H or methyl; Ar is unsubstituted phenyl or phenyl substituted with from 1 to 5 substituents, wherein each substituent is independently halogen or C₁-C₄ alkyl; and, n is 0 or 1. Further, exemplary vinyl aromatic monomers in accordance with Formula (VA) - which may be used alone or in combination - include but are not limited to: styrene; α-methylstyrene; 2-methylstyrene; 3-methylstyrene; 4-methylstyrene; 2-*tert*-butyl styrene; *4-tert-*butylstyrene; 2-chlorostyrene; and, 4-chlorostyrene.

As used herein, the term "*ethylenically unsaturated acid functional monomer*" denotes an ethylenically unsaturated monomer which is capable of developing a negative charge (-CO₂⁻) when the monomer is in an aqueous solution.

The ethylenically unsaturated acid functional monomer may be chosen from: ethylenically unsaturated carboxylic acids; ethylenically unsaturated sulfonic acids; ethylenically unsaturated phosphonic acids; and, mixtures thereof. Suitable ethylenically unsaturated sulfonic acids are, for instance, vinylsulfonic acid, methallyl sulfonic acid, allyloxybenzene sulfonic acid, styrene sulfonic acid, 2-acrylamido-2-methylpropanesulfonic acid, 2-methyacrylamido-2-methylpropanesulfonic acid, 2-acrylamidobutanesulfonic acid, 3-acrylamidobutanesulfonic acid and 2-acrylamido-2,4,4-trimethylpentanesulfonic acid. Suitable ethylenically unsaturated phosphonic acids include, for instance, vinylphosphonic acid, allylphosphonic acid, N-(meth)acrylamidoalkylphospohonic acid and (meth)acryloyloxyalkylphosphonic acids.

Exemplary ethylenically unsaturated carboxylic acids may be chosen from: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; and, C₁-C₆ alkyl esters of α,β-monoethylenically unsaturated tricarboxylic acids bearing at least one free carboxylic acid group; and, mixtures thereof. A preference may be mentioned for the use of ethylenically unsaturated carboxylic acids chosen from: methacrylic acid; acrylic acid; 2-ethylacrylic acid; α-chloro-acrylic acid; α-cyano acrylic acid; α-phenyl acrylic acid; itaconic acid; maleic acid; aconitic acid; crotonic acid; fumaric acid; cinnamic acid; p-chloro cinnamic acid; and, mixtures thereof.

For completeness, whilst such acid monomers should typically be used in the form of free acid, it is not precluded that the constituent acid groups of the monomers be partially or completely neutralized with suitable bases, provided this does not compromise their participation in copolymerization. Suitable counterions for the acidic group include: ammonium ions (NH₄⁺); alkali metal cations, in particular Li⁺, Na⁺ and K⁺; and, alkaline earth metal cations.

The aforementioned polymers (P^{F}), may be provided from commercial sources. By way of example, reference may be made to: FX7000 styrene acrylate copolymer, available from Elotex; Avandisp^{™} EA 109 styrene acrylate copolymer available from Avance Chem; Revacryl R248 surfactant stabilized styrene acrylate copolymer, available from Synthomer; HD 1500 vinyl acetate / vinyl versatate copolymer, available from Elotex; and, FX2322 vinyl acetate / ethylene copolymer available from Elotex.

In the alternative, such polymers (P^{F}) may be prepared by conventional means accessible to the skilled artisan, such as by emulsion polymerization. The obtained emulsion will be subject to spray drying to derive the polymer (P^{F}) in powdered form. Such spray drying may take place in conventional spray drying systems: for instance, a dispersion may be atomized into a drying chamber by passing through single, twin or multifluid nozzles or through impacting a rotating disk in a stream of (heated) drying gas; the drying chamber is provided with a product outlet through which the polymer powder is withdrawn. In general, air, nitrogen or nitrogen-enriched air is employed as the drying gas and the temperature of the drying gas should not usually exceed 250°C. Typical drying temperatures are from 100 to 200°C, with temperatures of from 120 to 180°C being preferred. The product outlet temperature may be determined based on the glass transition temperature of the polymer and the desired degree of drying but will typically be from 30°C to 120°C or from 40°C to 90°C.

In important embodiments, the water-dispersible powdered polymer (P^{F}) powders may be exemplified by a mean volume particle size (Dᵥ50) of from 5 to 150 µm or from 5 to 100µm to enable its facile dispersion into deionized water.

As described above, the particulate formulation may further comprise a colloidal stabilizer, an antiblocking agent or a combination thereof. In preparing the formulation of the present disclosure by mixing of its parts, the water-dispersible polymer (P^{F}) may in certain embodiments be provided to the formulation in the form of an admixture comprising said at least one film-forming, powdered polymer (P^{F}) and at least one of a colloidal stabilizer and an antiblocking agent.

The colloidal stabilizer may be present in the formulation in an amount of from 0 to 35 wt.%, based upon the weight of said at least one water-dispersible polymer (P^{F}). For example, the colloidal stabilizer may be present in an amount of from 1 to 30 wt.% or from 2 to 20 wt.%, based on the weight of said at least one water-dispersible polymer (P^{F}).

Exemplary colloidal stabilizers which may be present alone or in combination include: polyvinyl alcohols; polyvinyl acetals; polyvinylpyrrolidones; water-soluble polysaccharides, such as water-soluble forms of amylose, amylopectin, celluloses and carboxymethyl-, methyl-, hydroxyethyl- and hydroxypropyl- cellulose derivatives; lignin sulfonates; proteins, such as casein and gelatins; synthetic polymers such as poly(meth)acrylic acid, copolymers of (meth)acrylates with carboxyl-functional comonomer units, poly(meth)acrylamide, polyvinylsulfonic acids and their water-soluble copolymers; melamine formaldehyde sulfonates; naphthaleneformaldehyde sulfonates; and, styrene-maleic acid and vinyl ether-maleic acid copolymers.

A preference may be noted for the use of polyvinyl alcohol (PVOH) as at least part of the colloidal stabilizer. Exemplary commercial polyvinyl alcohol products include MOWIOL^{®} 4-88, 8-88, 13-88 and 18-88 available from Kuraray Europe GmbH.

As described, the particulate formulation may in certain embodiments comprise an anti-blocking agent in order to prevent caking and blocking of the powdered, water-dispersible polymer and thus, concomitantly, to improve the flow properties and storage stability of the powder. The anti-blocking agent may be present in the particulate formulation in an amount of from 0 to 35 wt.%, based on the weight of said at least one polymer (P^{F}). For example, the anti-blocking agent may be present in the particulate formulation in an amount of from 1 to 30 wt.% or from 2 to 20 wt.%, based on the weight of said at least one polymer (P^{F}).

The anti-blocking agent may be exemplified by a mean volume particle size (Dv50) of from 100nm to 10mm, for example 1 to 1000 µm, as determined by laser diffraction using a particle size analyzer. Independently of, or additional to this property, it is preferred that the anti-blocking agent is of mineral origin. Exemplary anti-blocking agents, which may be used alone or in combination, include: kaolin; calcium carbonate; magnesium carbonate; talc; gypsum; silica; and, silicates. A preference for kaolin may be mentioned.

In that embodiment wherein the anti-blocking agent is provided to the particulate formulation in admixture with the powdered, water-dispersible polymer(s) (P^{F}), the admixture of the anti-blocking agent should preferably be carried out when said at least one polymer (P^{F}) is still in a finely dispersed form, in particular when said polymer(s) (P^{F}) is still suspended in the drying gas within a drying chamber.

Whilst these embodiments present the colloidal stabilizer and the anti-blocking agent as adjunct materials of the particulate formulation *per se,* it will be appreciated that said compounds may alternatively or additionally be included as adjuncts within the compositions described below. It is not precluded, for example, that the colloidal stabilizer and / or the anti-blocking agent may be included within the second component of the described two-component (2K) compositions described below.

### d) Substantially Inert Filler

The particulate formulation comprises substantially inert filler. The formulation may typically comprise from 30 to 80 wt.%, based on the total weight of the particulate formulation, of d) said substantially inert filler. The formulation may, in particular, comprise from 40 to 60 wt.% or from 50 to 60 wt.%, based on the total weight of the particulate formulation, of d) said substantially inert filler.

Without intention to limit the present invention, the inert filler may comprise or consist of at least one particulate material selected from: natural calcium carbonate, such as chalk, calcite and marble; precipitated (synthetic) calcium carbonate (PCC); barium carbonate; dolomite; talc; sand; crystalline silica; titanium dioxide including fumed titanium dioxide; iron oxides; manganese oxides; kaolin; clays; mica; slag; calcium sulfate; basalt; barium sulfate; aluminium hydroxide; bauxite; and, mixtures thereof.

A preference for particulate materials having a Mohs hardness of greater than 1 might be noted. Independently of or additional to this hardness condition, the or each particulate material included as inert filler in the formulation should have a surface which is untreated. As regards particulate silica filler(s), treated or hydrophobic silica is thus not preferred.

Broadly, the inert filler should be characterized by a particle size of from 30 mesh to 1000 mesh, for example from 30 mesh to 500 mesh or from 100 mesh to 500 mesh, as determined in accordance with *ISO 3310-1:2016 Test sieves* - *Technical requirements and testing* - *Part 1: Test sieves of metal wire cloth.* Independently of or additional to this particle size recital, the inert filler should be characterized by a BET surface area of from 1 to 30 m²/g, preferably from 1 to 20 m²/g.

As will be recognized in the art, particles having these physical properties may be formed by micronizing, which term is intended to encompass both: particles which have been produced through finely dividing materials which are originally presented in bulk form; and, particles obtained by other mechanical, chemical or physical methods, including formation in solution with or without a seeding and comminution by one or more of pulverization, milling, grinding, homogenization and sonication.

### COMPOSITIONS

The present disclosure also provides a composition comprising: water; a) said belite-ye'elimite-ferrite clinker; b) calcium sulfate; c) said at least one water dispersible polymer (P^{F}); and, d) said substantially inert filler, wherein the composition is characterized by a water to cement factor of from 0.30 to 1.50, preferably from 0.40 to 0.80. For example, the composition may comprise, based on the total weight of non-volatile constituents in the composition: water; from 20 to 90 wt.%, preferably from 20 to 60 wt.% and more preferably from 30 to 60 wt.% of a) said belite-ye'elimite-ferrite clinker; from 0 to 10 wt.%, preferably 0.5 to 10 wt.%, more preferably 2 to 6 wt.% of b) said calcium sulfate; from 0.5 to 20 wt.%, preferably from 0.5 to 15 wt.% and more preferably from 1 to 10 wt.% of c) said at least one water-dispersible powdered polymer (P^{F}); and, from 30 to 60 wt.%, preferably from 40 to 60 wt.% and more preferably from 50 to 60 wt.% of d) said substantially inert filler, wherein the composition is characterized by a water factor of from 0.10 to 0.60 preferably from 0.20 to 0.40

The water and the belite-ye'elimite-ferrite clinker are reactive species and therefore should be kept separate until shortly before or during the application of the composition. That aside, there is no particular intention to limit how that aqueous composition is formed. For instance, either one or both of the at least one water-dispersible powdered polymer (P^{F}) and the substantially inert filler may be combined with water and then subsequently admixed with the belite-ye'elimite-ferrite clinker. However, in an important embodiment, the particulate formulation described above is prepared in the absence of water and then combined with water to form the aqueous composition.

The present disclosure is thus directed, in an important embodiment, to a two-component (2K) composition comprising: a first component comprising the particulate formulation as defined hereinabove; and, a second component comprising water, wherein said composition is characterized by a water factor of 0.10 to 0.6, preferably from 0.20 to 0.40.

In an embodiment, the two-component (2K) composition comprises:
a first component comprising, based on the total weight of non-volatile constituents in the composition:
   from 20 to 90 wt.%, preferably from 20 to 60 wt.% and more preferably from 30 to 60 wt.% of a) said belite-ye'elimite-ferrite clinker;
   from 0 to 10 wt.%, preferably 0.5 to 10 wt.%, more preferably 2 to 6 wt.% of b) said calcium sulfate;
   from 0.5 to 20 wt.%, preferably from 0.5 to 15 wt.% and more preferably from 1 to 10 wt.% of c) said at least one water-dispersible powdered polymer (P^{F}); and,
   from 30 to 60 wt.%, preferably from 40 to 60 wt.% and more preferably from 50 to 60 wt.% of d) said substantially inert filler; and,
a second component comprising water,
where the composition is characterized by a water factor of from 0.10 to 0.6, preferably from 0.20 to 0.40.

### d) Adjuvants

The term "*adjuvant*" as used herein denotes a substance within the meaning of standard EN 206.1, and specifically the definition in paragraph 3.1.22 thereof: a product added to the composition in small amounts relative to the mass of composition in order to modify the properties of the fresh or cured composition. In the aforementioned exemplary two-component (2K) composition, the adjuvants may be added to either one or both components of the composition prior to the mixing thereof. For completeness, the present disclosure does not therefore preclude the particulate formulation described above from comprising adjuvants where such adjuvants do not compromise the desired characteristics of the formulation including but not limited to particle size and moisture content.

Such adjuvants can be used in such combination and proportions as desired, provided they do not adversely affect the nature and essential properties of the composition. While exceptions may exist in some cases, the composition should not comprise *in toto* more than 20 wt.%, based on the total weight of non-volatile constituents in the composition, of adjuvants and preferably should not comprise more than 10 wt.% of said adjuvants.

The composition may comprise at least one adjuvant chosen from: plasticizers; superplasticizers; setting retarders; catalysts; setting accelerators, such as nitrate, thiocyanate and chloride salts; curing accelerators, such as alkali metal carbonates; anti-shrinkage agents; defoaming agents; leak-proofing agents such as calcium stearate; natural pozzolanic compounds, such as pumice, trass, santorin earth, kieselguhr, homstone and chert; synthetic pozzolanic compounds, such as fired, ground clay (ground brick), fly ashes, silica dust, oil shale ash and metakaolin; anti-sedimentation agents, such as bentonites and attapulgites; mineral or organic pigments; a latex or latices; rheology modifiers; biocides; and, water retainers, such as starch ethers, cellulose ethers and modified cellulose ethers.

A "*plasticizer*" for the purposes of this disclosure is a substance that decreases the viscosity of the composition and thus facilitates its processability. Herein the plasticizer may constitute up to 1 wt.% or up to 0.5 wt.%, based on the total weight of non-volatile constituents in the composition, and is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof.

As is known in the art, a "*superplasticizer*" denotes a de-flocculant organic compound, which acts by electrostatic repulsion and / or by steric bulk. Herein the superplasticizer may constitute from 0 to 1 wt.%, for example from 0 to 0.5 wt.%, based on the total weight of non-volatile constituents in the composition, and is preferably selected from the group consisting of: polycarboxylates; melamine sulfonates; and, polynaphthalene sulfonates.

Exemplary set retarders include but are not limited to: citric acid; ulosonic acids; uronic acids; aldaric acids, in particular tartaric acid; aldonic acids and salts thereof, in particular gluconic acid and salts thereof; D-glucono-1,5-lactone; alkali metal, ammonium or alkaline earth metal gluconate salts; boric acid; borax (*anhydrous borate of sodium*); alkali metal phosphates; gum arabic; and, lignin derivatives, such as lignosulfonic acid salt.

To mitigate for the excessive entrainment of air in the compositions and / or to provide predictable air contents therein, defoaming agents may be included in the compositions in an amount up to 2 wt.%, based on the total weight of non-volatile constituents in the composition. The term "*defoaming agent"* is used herein to encompass materials which have one or more of an antifoaming efficacy, a defoaming efficacy or a de-aeration efficacy. Antifoaming references the inhibition or prevention of foam formation. Defoaming references the decrement or removal of foams which have already been formed. De-aeration refers to the escape of entrapped air. Exemplary commercial defoamers having utility herein include: BYK037 available from BYK-Chemie GmbH; and, Tego Foamex 1488 available from Evonik Industries.

If necessary, one or more air entraining agents may be added to the composition for the purpose of capturing an amount of air and rendering the obtained cured composition more durable to *inter alia* freeze-thaw conditions. In addition, entrained air can improve the composition while limiting segregation and bleeding and can further improve the cured composition's resistance to surface scaling caused by chemical deicers.

When present, air entraining agents may conventionally constitute up to 1 wt.%, based on the total weight of non-volatile constituents in the composition. More typically, said air entraining agents should be added in an amount from 0 to 0.5 wt.%, based on the total weight of non-volatile constituents in the composition.

A wide variety of substances has been proposed as air-entraining agents including: surfactants; substances that produce gas pores or gas bubbles in the not-yet-set composition by triggering a chemical reaction; (3) solid substances that are preformed and/or granulated in foam form from polymers or inorganic materials, or mixtures of these materials; and, biodegradable materials that decompose to form pores.

Suitable surfactants include: anionic surfactants; nonionic surfactants; amphoteric surfactants; cationic surfactants, such as cationic surfactants of the primary amine salt, secondary amine salt, tertiary amine salt and quaternary amine salt types; and, mixtures thereof. More commonly, anionic and nonionic surfactants can be utilized as well as mixtures thereof.

Suitable anionic surfactants for facilitating emulsion polymerizations include, but are not limited to: sodium lauryl sulfate; sodium dodecyl benzene sulfonate; sodium (C₆-C₁₈) alkyl phenoxy benzene sulfonate; disodium (C₆-C₁₈) alkyl phenoxy benzene sulfonate; disodium (C₆-C₁₈) di-alkyl phenoxy benzene sulfonate; disodium laureth-3 sulfosuccinate; sodium dioctyl sulfosuccinate; sodium di-sec-butyl naphthalene sulfonate; disodium dodecyl diphenyl ether sulfonate; disodium n-octadecyl sulfosuccinate; and, phosphate esters of branched alcohol ethoxylates.

Nonionic surfactants suitable for facilitating emulsion polymerizations include, without limitation: linear or branched alcohol ethoxylates; C₈-C₁₂ alkylphenol alkoxylates, such as octylphenol ethoxylates; and, polyoxy(C₂-C₃)alkylene block copolymers. Further useful nonionic surfactants include: C₈-C₂₂ fatty acid esters of polyoxyethylene glycol; mono- and diglycerides; sorbitan esters and ethoxylated sorbitan esters; C₈-C₂₂ fatty acid glycol esters; block copolymers of ethylene oxide and propylene oxide having an hydrophobic-lipophilic balance (HLB) value of greater than 12; ethoxylated octylphenols; and, combinations thereof.

Biodegradable materials having utility as air entraining agents include: fatty acids; synthetic biodegradable polymers, such a such as poly(3-hydroxybutyrate, poly(butylene succinate), poly(glycolic acid), polyglycolide; poly(lactic acid) and polylactide; cellulose acetate; sulfonated lignin; rosins and modified rosins; and, proteinaceous materials, such as gluten and protein hydrolyzates.

The term "*rheology modifier*" denotes an organic compound having utility in increasing one or more of the viscosity, the cohesion and the shear threshold of the composition. Rheology modifiers may further have an anti-bleeding effect. As exemplary rheology modifiers having utility in the present invention mention may be made of modified or unmodified polysaccharides such as diutan gums, xanthan gums, gellan gums and welan gums.

In certain situations it may be beneficial for the composition to include biocide. When the composition is both prepared and utilized in a short amount of time, such biocide need not be necessary. Conversely added biocide can prevent the growth of microbial organisms where the composition is intended to be stored for some time prior to use. Thereby the shelf-life of the composition may be determinative of the amount of biocide added to inhibit or prevent microbial growth but illustrative added amounts of biocide are from 0.01 to 2 wt.% or from 0.01 to 1 wt.%, based on the total weight of non-volatile constituents in the composition.

Without intention to limit the present invention, exemplary biocidal compounds which may be used alone or in combination include: pyrithione (*2-mercaptopyridine-N-oxide*) salts, in particular sodium pyrithione (CAS Registry No. 3811-73-2) and zinc pyrithione (ZPT); isothiazolinone compounds, such as 5-chloro-2-methyl-4-isothiazolin-3-one, 2-methyl-4-isothiazolin-3-one, 4,5-dichloro-2-methylisothiazolin-3-one, 2-n-octylisothiazolin-3-one, 1,2-benzisothiazolin-3-one, 4,5-trimethylene-4-isothiazolin-3-one and 2-methyl-4,5-trimethylene-4-isothiazolin-3-one; diidomethyl-4-tolylsulfone; thiabendazole; tebuconazole; 3-iodo-2-propynyl butylcarbamate; and, ortho-phenyl phenol (OPP).

### METHODS AND APPLICATIONS

The composition described herein can serve as a typical all-purpose mortar composition suitable for a variety of applications, including repair, fixing holes, plastering, masonry, and coating. This versatile composition leverages a combination of the mentioned components above. This composition is designed to be applied to substrates that may be pre-treated to enhance adhesion, and can be used in conjunction with primers to optimize the curing process. Thus, it provides a reliable and durable solution for a wide range of construction and maintenance needs.

Without intention to limit the present disclosure, the admixing of the ingredients of the composition will conventionally entail the dry mixing of at least a fraction - preferably the majority of and potentially all - of the solid ingredients of the composition in an appropriate mixer: water is then gradually added to the mixture together with the residual solids fraction, if applicable, while running the mixer. The pre-dispersal in water of the residual solids fraction - which in embodiments may include the substantially inert filler, the dispersible polymer and / or adjuvants - prior to its admixture with the dry mixed fraction of the composition is not precluded.

With specific regard to the two component (2K) composition, the first particulate component and the aqueous second component of the composition are admixed. Water *per se* may be independently added to the first component. Alternatively or additionally, one or more adjuvants may be pre-dispersed in water prior to admixture to the remaining parts of the composition.

Independently of the order in which the ingredients of the composition are added, it is preferred that high intensity mixing - providing a mixing energy of at least 0.5 kW per 100 kg of ingredients - is used to ensure that a homogeneous mixture is obtained. The use of a flat-bladed mixer may also be of benefit.

The method by which the composition is subsequently to be applied is one determinant of the total amount of water added and the time at which any water is admixed with the solid ingredients relative to the application of the composition. However, a further determining consideration is that the addition of too much water may result in particulate materials falling out of suspension, which materials can be difficult to re-suspend. In these regards, a water to cement factor of 0.30 to 1.5, preferably from 0.40 to 0.80, may be mentioned as being suitable in mixing the present composition. Independently of or additional to the water factor, it is preferred that the composition be characterized by a viscosity at application of above 1 000 000 centipoise (mPas) and/or less than 200 000 000 centipoise, for example from 10 000 000 to 100 000 000 centipoise.

The above-described compositions are applied to a substrate and then allowed to harden *in situ.* Prior to applying the compositions, it is often advisable to pre-treat the relevant surfaces to remove foreign matter there from: this step can, if applicable, facilitate the subsequent adhesion of the compositions thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In certain embodiments, a primer may be applied to the optionally pre-treated substrate prior to the application of the compositions. Such primers may, in certain embodiments, have utility in moderating the basicity of the substrate to obtain the sought rate of cure of the subsequently applied compositions. For example, where the substrate surface does not possess intrinsic basicity, the primer composition may moderate the substrate surface such that it possesses a pH of from 8 to 14 or from 8 to 13, as determined in accordance with ASTM F710-11.

Such a primer composition may comprise or consist of an aqueous solution for which exemplary solutes include but are not limited to: alkali metal phosphates, such as sodium tripolyphosphate; alkaline earth metal phosphates; alkali metal carbonates; alkaline earth metal carbonates; alkali metal bicarbonates; alkaline earth metal bicarbonates; alkali metal sesquicarbonates, in particular sodium sesquicarbonates; alkali metal silicates; alkali metal hydroxides; alkaline earth metal hydroxides; ammonia; and, water soluble basic amines such as methylamine, ethylamine, dimethylamine, ethanolamine and ethylenediamine.

It is not precluded that the primer composition may be a particulate solid or a dispersion of a particulate solid in an appropriate liquid carrier medium, such as water. Whilst the particulate materials might be sized to penetrate into porous substrates, the disposal of the particulates on the surface of the substrates, after evaporation and / or absorption of the carrier liquid, should serve to render the substrate surface with the desired pH. Exemplary particulate solids include lime and calcium carbonate.

The primer composition may be applied by conventional application methods such as flooding, dipping, brushing, roll coating, doctor-blade application, printing methods, air-atomized spray, air-assisted spray, airless spray, high volume-low pressure spray, air-assisted airless spray and high-speed rotation bell.

The viscosity of any water or solvent borne primer composition will generally be from 0.005 to 1 Pa s (50 cps to 1000 cps), as measured using a Brookfield viscometer at 25° C. However, as would be recognized by a skilled practitioner, the viscosities which are appropriate for the different application methods can vary considerably. In any event, the primer composition should generally be applied to the substrate surface in an amount of from 5 to 50 g/m², preferably from 10 to 30 g/m², for example from 20 to 30 g/m².

A water or solvent borne primer composition should be allowed to penetrate the surface before the application of the described compositions thereto. The appropriate penetration time will depend on the amount of primer composition applied and the density, moisture content and morphology of the substrate material. Generally a penetration time of up to 20 minutes - for example of from 0 to 15 or from 1 to 10 minutes - should be viable under standard conditions (room temperature, 65% Relative Humidity).

Independently of the choice of primer composition and any optional penetration time which is permitted, it will be appropriate to confirm the basicity of the substrate surface, using the measurement method of ASTM F710-11, prior to the application of the compositions thereto.

The compositions are then applied to the preferably pre-treated surfaces of the substrate by conventional application methods such as: brushing; roll coating; using a trowel; using a float; pumping; ramming; casting; gunning; and, spraying. The methods of gunning and spraying may be performed using conventional, commercially available equipment but through selecting pressure conditions, nozzle type(s), conduit (hose) length and diameters such that clogging of the equipment is obviated and a controlled application pattern is achieved.

Whilst the application of the compositions by the aforementioned methods may be performed in a single or multiple step manner, it is recommended that the compositions be applied to a total wet film thickness of from 0.5 to 100 mm, for example 0.5 to 75 mm or from 0.5 to 25 mm.

The hardening of the compositions of the invention can occur at temperatures in the range of from 5 to 70°C, preferably from 10°C to 40°C, and in particular from 15°C to 30°C. The temperature that is suitable depends on the specific compounds present and the desired setting rate and can be determined in the individual case by the skilled artisan, using simple preliminary tests if necessary. Where applicable, the temperature of the mixture formed from the respective components of the composition may be raised above the mixing temperature and / or the application temperature using conventional means including microwave induction. Alternatively or additionally, the compositions may be applied to a pre-heated substrate, this pre-heating facilitating the fast setting of the composition and an improved adhesion to the substrate. In an illustrative embodiment, the compositions are applied in a series of thin layers to attain a desired total thickness, wherein the substrate is maintained at a temperature of from 5 to 70°C throughout the application of each layer.

The composition, as coating composition may be applied as a new surface coating to structures fabricated from concrete, from refractory materials or from metallic materials. The substrate might be selected from asbestos; concrete; cementitious substrates; calcareous substrates; and, inorganic mortar. Further, the coating composition may be used in a restorative function, for instance to repair equipment wherein a coating or a refractory surface material has become displaced or abraded.

The composition of the present invention may be applied to form new composite structures comprising said and one or more substrates. It is also considered that the composition may be used in a restorative function, for instance to repair a composite structure which has become broken, displaced or abraded.

As discussed above, the present composition may have particular utility as an adhesive formulation for the application of flooring coverings to a substrate. As exemplary floor coverings, mention may be made of: plasticized polyvinylchloride (PVC); textiles; linoleum; rubber; polyolefins, such as polyethylene and polypropylene; copolymers of olefins with vinylic monomers; brick; screed; and, slate. The substrate might be selected from asbestos; concrete; cementitious substrates; calcareous substrates; and, inorganic mortar.

Conventionally, the composition will be disposed between the floor covering or tile and the substrate but it might find either independent or complimentary utility as a grouting material disposed between sections of the floor covering after installation. In case of a tile, the said second substrate as a tile may be selected from the group consisting of: ceramic tile; porcelain tile; glass tile; cement tile; marble tile; granite tile; limestone tile; travertine tile; quarry tile; metallic tile; wooden tile; and, resinous tile.

When used as an adhesive formulation, the composition will be applied to the substrate as discussed above. Whilst the composition may be permitted to cure for a duration of time, any floor covering should be applied to the composition during the open time thereof. As will be familiar to the skilled artisan, after applying the floor covering, pressure may be applied to thereto for using, for example, a static weight or a roller which is passed backwards and forwards over the applied covering.

The following examples are illustrative of the present invention and are not intended to limit the scope of the invention in any way.

### EXAMPLES

The following products and commercial products were utilized in the Example:

| | |
|---|---|
| Ternocem: | Belite-ye'elimite-ferrite (BYF) cement with 10Wt-% CaSO₄, available from Heidelberg Cement. |
| VINNAPAS^{®} 5028 E: | Dispersible polymer powder based on a copolymer of vinylacetate and ethylene, available from Wacker Chemie AG. |
| Silipon 31 HDH: | Air-entraining agent, available from Ashland. |
| Sand: | Silica sand washed and dried, having an average grain size (min. 94% of particles) in the range of 0,1 to 0,5 mm |

### Dry Mix Formulations

Dry mix formulations were prepared in accordance with Table 1 below using a mixer meeting standard BS EN BS EN 196-7:2007 *Methods of testing cement: Methods of taking and preparing samples of cement.*

**Table 1**

| **Ingredient** | **Reference Dry Mix, RDM1 (wt.%)** | **Dry Mix 1, DM1 (wt.%)** | **Dry Mix 2, DM2 (wt.%)** | **Dry Mix 3, DM3 (wt.%)** | **Dry Mix 4, DM4 (wt.%)** |
|---|---|---|---|---|---|
| Ternocem | 40.000 | 40.000 | 40.000 | 40.000 | 40.000 |
| Sand | 60.000 | 57.990 | 58.000 | 57.000 | 57.998 |
| Vinnapas 5028E | | 2.000 | 2.000 | 2.000 | 2.000 |
| Defoamer | | | | 1.000 | 0.002 |
| Silipon 31 HDH | | 0.010 | | | |

The following was determined for each of the dry mix formulations and the results of the determination provided in Table 2 below:
Density: The dry (apparent) density was measured by weighing a cured prism of defined size (40x40x160mm) on the scale in ambient air.

**Table 2**

| **Tested Parameter** | **RDM1** | **DM1** | **DM2** | **DM3** | **DM4** |
|---|---|---|---|---|---|
| Dry (apparent) Density (kgm⁻³) | 1.9 | 1.9 | 1.7 | 1.9 | 1.9 |

### Compositions

The above mentioned dry mix formulations were mixed with water using a mixer meeting standard BS EN 196-7:2007. The formed compositions are detailed in Table 3 below.

**Table 3**

| **Ingredient** | **Reference Composition (RC1, wt.%)** | **Composition 1 (C1, wt.%)** | **Composition 2 (C2, wt.%)** | **Composition 3 (C3, wt.%)** | **Composition 4 (C4, wt.%)** |
|---|---|---|---|---|---|
| Water | 24 | 24 | 22 | 24 | 24 |
| RDM1 | 100 | | | | |
| DM1 | | 100 | | | |
| DM2 | | | 100 | | |
| DM3 | | | | 100 | |
| DM4 | | | | | 100 |

The water to cement (BYF) ratios of these compositions are as follows: RC1, 0.60; C1, 0.60; C2, 0.55; C3, 0.60; C4, 0.6.

The tabulated compositions were cast into prismatic specimens having the dimensions 4 cm x 4 cm x 16 cm. Specimens were demoulded 24 hours after casting. The demoulded prisms were kept:
a) For further 27 days in standard conditions
b) For furter 6 days in normal lab conditions; 21 days water bath
c) For furter 6 days in normal lab conditions; 21 days water bath and then subjected to 25 freeze thaw cycles (according to EN 12004)

Percentage aeration, flexural strength and compressive strength were determined according to the following tests wherein three specimens were tested for each stated composition and treatment condition.

Wet Aeration: The aeration of fresh mortar was determined in accordance with EN 1015-7:1998 *Methods of test for mortar for masonry* - *Part 7: Determination of air content of fresh mortar* before casting the prism of the mortarts.

Strength Testing: The strength of the specimens was determined in accordance with BS EN 1015-11:2019 *Methods of test for mortar for masonry: Determination of flexural and compressive strength of hardened mortar* after the application of the heat-ageing, water immersion and freeze-thaw conditions tabulated below.

Further testing methodologies are given in results Table 4 below, where applicable.

**Table 4**

| **Tested Parameter** | **Conditions** | **RC1** | **C1** | **C2** | **C3** | **C4** |
|---|---|---|---|---|---|---|
| Water to Belite-Ye'elimite-Ferrite (BYF) cement ratio by weight | | 0.60 | 0.60 | 0.55 | 0.60 | 0.60 |
| Wet aeration (%) | | 1.5 | 6.8 | 13.5 | 2.9 | 5.9 |
| Flexural Strength (MPa) | Standard Laboratory Conditions | 2.3 | 1.5 | 3.3 | 3.2 | 3.1 |
| | 7 days, normal lab conditions; 21 days water bath | 6.5 | 6.0 | 3.8 | 6.2 | 57 |
| | 7 days normal lab conditions; 21 days water bath; 25 Freeze-Thaw cycles | 0.0 | 7.0 | 5.3 | 3.4 | 5.9 |
| | 14 days, normal lab conditions; | 1.6 | 1.6 | 2.5 | 2.3 | 2.6 |
| | 14 days at 70°C within 24 hours | | | | | |
| Compressive Strength (MPa) | Standard Laboratory Conditions | 39.4 | 29.0 | 28.1 | 34.8 | 32.9 |
| | 7 days, normal lab conditions; 21 days water bath | 37.2 | 26.3 | 22.0 | 28.0 | 26.7 |
| | 7 days normal lab conditions; 21 days water bath; 25 days Freeze-Thaw | 0.0 | 33.9 | 26.3 | 229 | 28.8 |
| | 14 days, normal lab conditions; 14 days at 70°C within 24 hours | 25.4 | 20.4 | 20.3 | 26.4 | 273 |

The flexural and compressive strengths achieved under heat-ageing and freeze-thaw cycling indicate a resistance of the present cured composition to thermal shocks.

In view of the foregoing description and example, it will be apparent to those skilled in the art that equivalent modifications thereof can be made without departing from the scope of the claims.

## Claims

1. A particulate formulation comprising:
a) belite-ye'elimite-ferrite clinker;
b) calcium sulfate;
c) at least one water-dispersible powdered polymer (P^{F}); and,
d) d) substantially inert filler.

2. The particulate formulation according to claim 1 comprising, based on the total weight of the particulate formulation:
from 20 to 90 wt.%, preferably from 20 to 60 wt.% and more preferably from 30 to 60 wt.% of a) said belite-ye'elimite-ferrite clinker;
from 0 to 10 wt.%, preferably 0.5 to 10 wt.%, more preferably 2 to 6 wt.% of b) said calcium sulfate;
from 0.5 to 20 wt.%, preferably from 0.5 to 15 wt.% and more preferably from 1 to 10 wt.% of c) said at least one water-dispersible powdered polymer (P^{F}); and,
from 30 to 75 wt.%, preferably from 40 to 70 wt.% and more preferably from 50 to 60 wt.% of d) said substantially inert filler.

3. The particulate formulation according to claim 1 or claim 2 having a moisture content of less than 5 wt.%, based on the weight of the particulate formulation, as determined by thermogravimetry.

4. The particulate formulation according to any one of claims 1 to 3, wherein the belite-ye'elimite-ferrite clinker has a Blaine Specific Surface Area of from 3000 to 10000 cm²/g, as determined in accordance with European Standard EN 196-6 (2019).

5. The particulate formulation according to any one of claims 1 to 4, wherein the belite-ye'elimite-ferrite clinker comprises, based on the weight of the belite-ye'elimite-ferrite clinker: from 5 to 30 wt.% of i) a calcium aluminoferrite phase having the general formula 2CaO·x Al2O3·(1-x) Fe2O3, wherein x is from 0.2 to 0.8; from 10 to 35 wt.% of ii) a calcium sulfoaluminate phase having the general formula (4CaO·3Al2O3·SO3); from 40 to 75 wt.% of iii) a belite phase having the general formula 2CaO· SiO2; and, from 0.01 to 10 wt.% of iv) at least one more phase selected from calcium sulphates, alkali sulphates, perovskite, gehlenite, free lime, periclase a vitreous phase and combinations thereof, wherein the total of the percentage by weight of phases (i)-iv)) is at least 97 wt.%.

6. The particulate formulation according to any one of claims 1 to 5, wherein the or each water-dispersible powdered polymer (P^{F}) is water-insoluble and film-forming and/or the or each water-dispersible powdered polymer (P^{F}) has a calculated glass transition temperature (T_{g}) of from -60°C to 80°C, preferably from -20°C to 50°C and more preferably from -10°C to 30°C.

7. The particulate formulation according to any one of claims 1 to 6 further comprising a colloidal stabilizer in an amount up to 35 wt.%, based on the weight of c) said at least one water-dispersible powdered polymer (P^{F}) and/ or further comprising an anti-blocking agent in an amount up to 35 wt.%, based on the weight of c) said at least one water-dispersible powdered polymer (P^{F}).

8. The particulate formulation according to any one of claims 1 to 7, wherein said substantially inert filler d) has a particle size of from 30 mesh to 500 mesh, preferably from 100 mesh to 500 mesh as determined in accordance with ISO 3310-1:2016 *Test sieves* - *Technical requirements and testing* - *Part 1: Test sieves of metal wire cloth* and/or said substantially inert filler d) has a BET surface area of from 1 to 30 m²/g, preferably from 1 to 20 m²/g.

9. A coating composition comprising:
water;
a) belite-ye'elimite-ferrite clinker;
b) calcium sulfate,
c) at least one water-dispersible polymer (P^{F}); and,
d) substantially inert filler,
wherein said coating composition is **characterized by** water to cement factor of from 0.3 to 1.5, preferably from 0.4 to 0.8.

10. A two-component (2K) coating composition comprising:
a first component comprising the particulate formulation as defined in any one claims 1 to 8; and,
a second component comprising water,
wherein said coating composition is **characterized by** water to cement factor of from 0.3 to 1.5, preferably from 0.4 to 0.8.

11. A method of forming a coated substrate, said method comprising:
si) providing a coating composition as defined in claim 9 or claim 10;
sii) providing a substrate comprising a first substrate surface;
siii) applying said coating composition to said first substrate surface; and;
siv) allowing said coating composition to harden.

12. The method according to claim 14, wherein in step siii) said coating composition is applied to a total wet film thickness of from 5 to 200 mm, preferably from 10 to 100 mm and/or said coating composition is permitted to harden at a temperature of from 5°C to 70°C, preferably from 10°C to 40°C and in particular from 15°C to 30°C.

13. A method of forming a composite structure, said method comprising:
ci) providing a coating composition as defined in claim 9 or claim 10:
cii) providing a first substrate comprising a first substrate surface;
ciii) applying said coating composition to said first substrate surface;
civ) providing a second substrate comprising a second substrate surface;
cv) disposing said second substrate onto the applied coating composition such that said coating composition is interposed between said second substrate surface and said first substrate surface; and,
cvi) allowing said applied coating composition to harden.

14. A composite structure obtained by the method defined in claim 13, wherein:
said first substrate is selected from the group consisting of: asbestos; concrete; cementitious substrates; calcareous substrates; and, inorganic mortar; and,
said second substrate is a floor covering material selected from the group consisting of: plasticized polyvinylchloride; textiles; linoleum; rubber; polyolefins; copolymers of olefins with vinylic monomers; brick; screed; and, slate.

15. A composite structure obtained by the method defined in claim 13, wherein:
said first substrate is selected from the group consisting of: asbestos; concrete; cementitious substrates; calcareous substrates; and, inorganic mortar;
said second substrate is a tile selected from the group consisting of: ceramic tile; porcelain tile; glass tile; cement tile; marble tile; granite tile; limestone tile; travertine tile; quarry tile; metallic tile; wooden tile; and, resinous tile.
